# EUROPEAN PATENT APPLICATION

(11) **EP 4 502 905 A1**
(43) Date of publication of application: **05.02.2025**
(21) Application number: 24188226.5
(22) Date of filing: 12.07.2024
(51) Int. Cl.: G06Q 30/02, G06Q 30/0226, H04L 9/08, H04L 9/32

(54) **INFORMATION PROCESSING PROGRAM, INFORMATION PROCESSING METHOD, AND INFORMATION PROCESSING APPARATUS**

(30) Priority: 01.08.2023 JP 2023125835
(71) Applicant: FUJITSU LIMITED, Kawasaki-shi, Kanagawa 211-8588 (JP)
(72) Inventor: FUKUOKA, Takeru, Kawasaki-shi, Kanagawa, 211-8588 (JP)
(74) Representative: Hoffmann Eitle

(57) **Abstract**

An information processing program for causing a computer to execute a process includes: storing, in a storage area, first secret data in which behavior data of a user related to a provided service is concealed; exchanging the first secret data for second secret data that corresponds to issuance of a point converted from the behavior data according to a predetermined rule; and presenting the second secret data to a point providing system and making a point issuance request.

## Description

### FIELD

The embodiment discussed herein is related to an information processing program, an information processing method, and an information processing apparatus.

### BACKGROUND ART

In recent years, there has been active use of a loyalty program that issues points calculated under certain conditions to give them to a consumer according to specific behavior of the consumer, such as a payment amount for various products or services, the number of store visits, or the like. For example, there is a loyalty program or the like that issues a point for specific behavior with respect to the environment. A user of the loyalty program may use the obtained point for appropriation to a part of subsequent payment for products or services, exchange for special products, or the like.

Information regarding the specific behavior that triggers the point issuance is wide-ranging, such as a purchase history, and often includes personal information. In this regard, when an organization that obtains and manages the information regarding the specific behavior that serves as a trigger is the same as the organization that issues points, there is a lower possibility that a problem regarding handling of the personal information occurs.

However, there is also a case where the organization that manages data in which the information regarding the specific behavior that triggers the point issuance is different from the organization that issues points. For example, a case where there is a retailer that sells products and a loyalty program provider that issues points will be described. In this case, the user of the loyalty program performs specific behavior, such as purchase of a product, at the retailer. The retailer stores information regarding the specific behavior performed by the user as behavior data. Then, the retailer discloses the stored behavior data to the loyalty program provider, and requests the loyalty program provider to issue points corresponding to the specific behavior of the user. The loyalty program provider gives the points corresponding to the specific behavior of the user to the consumer according to the request from the retailer. In such a configuration, the loyalty program provider is enabled to know the behavior history of the user from the information disclosed by the retailer, and the personal information of the user may be disclosed to the loyalty program provider in a form unexpected by the user.

In view of the above, in order to protect the personal information, the loyalty program provider commonly discloses affiliated partner companies, obtains behavior data from each partner company after obtaining consent of the user for data provision from the partner company, and issues points. This consent includes various items, such as whether the behavior data may be newly shared with a newly entered company, whether past behavior data may be shared retroactively, and the like. By such governance in accordance with the privacy policy, the loyalty program provider makes an effort to protect the personal information of the user.

Note that, as a technique related to goods transactions, a technique has been proposed in which a client device reads information including a dynamically generated link for activating a contactless card and transmits it a server, and the contactless card is activated when verification by the server is successful.

### Citation List

### Patent Literature

[PTL 1] Japanese National Publication of International Patent Application No. 2022-502888.

### SUMMARY OF INVENTION

### TECHNICAL PROBLEM

However, according to the method of obtaining the consent of the user for the data provision for each partner company in each case, the loyalty program provider may need to obtain the consent from all users when there is new entry to the partner companies. Obtaining the consent from all the users each time of new entry in this manner is not realistic in terms of procedure, cost, and the like. Furthermore, since complicated procedures occur at the time of new entry, the threshold for entering a new company is high, and the loyalty program provider is less likely to call for new entry to a company having behavior data that may be subject to point granting. Thus, according to the method of obtaining the consent from the user regarding the data provision of each partner company, it is difficult to efficiently manage the loyalty program, such as improving reliability of the loyalty program to facilitate new entry.

Furthermore, according to the technique of activating the contactless card based on the verification result of the information including the dynamically generated link for activating the contactless card, restrictions on the provision of the personal information between companies are not considered, and it is difficult to give points based on the behavior data while protecting the personal information. Thus, it is difficult to efficiently manage the loyalty program.

The disclosed technology has been conceived in view of the above, and an object is to provide an information processing program, an information processing method, and an information processing apparatus for efficiently managing a loyalty program.

### SOLUTION TO PROBLEM

In one aspect of embodiment, an information processing program for causing a computer to execute a process includes:storing, in a storage area, first secret data in which behavior data of a user related to a provided service is concealed exchanging the first secret data for second secret data that corresponds to issuance of a point converted from the behavior data according to a predetermined rule; andpresenting the second secret data to a point providing system and making a point issuance request.

### EFFECTS OF INVENTION

In one aspect, the embodiment may efficiently manage a loyalty program.

### BRIEF DESCRIPTION OF DRAWINGS

FIG. 1 is a schematic diagram of a loyalty program according to an embodiment;
FIG. 2 is a block diagram of an anonymous link server;
FIG. 3 is a diagram illustrating an outline of an issuance process, an exchange process, and a settlement process by a loyalty program system;
FIG. 4 is a sequence diagram of the issuance process in the loyalty program system according to the embodiment;
FIG. 5 is a sequence diagram of the exchange process in the loyalty program system according to the embodiment;
FIG. 6 is a sequence diagram of the settlement process in the loyalty program system according to the embodiment; and
FIG. 7 is a hardware configuration diagram of the anonymous link server.

### DESCRIPTION OF EMBODIMENTS

Hereinafter, an embodiment of an information processing program, an information processing method, and an information processing apparatus disclosed in the present application will be described in detail with reference to the drawings. Note that the following embodiment does not limit the information processing program, the information processing method, and the information processing apparatus disclosed in the present application.

### [Embodiment]

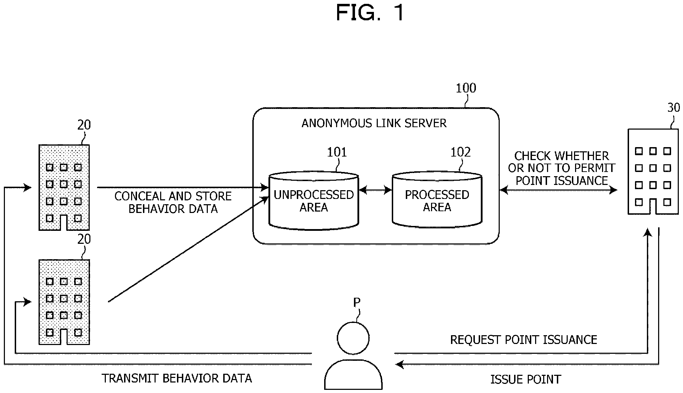

FIG. 1 is a schematic diagram of a loyalty program according to an embodiment. An outline of a loyalty program system 1 will be described with reference to FIG. 1. As illustrated in FIG. 1, the loyalty program system 1 includes a user P, a plurality of stores 20, a loyalty program provider 30, and an anonymous link server 100.

The user P performs specific behavior such as purchasing behavior, environmental behavior, or the like with respect to any one or the plurality of stores 20. Then, the user P transmits, to the store 20, behavior data indicating the specific behavior performed by him/herself and behavior evidence for proving the execution of the specific behavior. The behavior data is raw data in which the specific behavior performed by the user P is recorded as it is.

Here, the behavior data may be issued by the store 20. Furthermore, the behavior evidence may also be generated and provided by the store 20. In such a case, the store 20 may retain the behavior data and the behavior evidence generated when the user P performs the specific behavior with respect to the store 20 without receiving provision of the behavior data and the behavior evidence from the user P.

The store 20 is an organization, such as a retailer, a service provider, or the like, to which the user P performs the specific behavior. The store 20 receives the provision of the behavior data and the behavior evidence from the user P. Then, as preparation for point issuance to the user, the store 20 provides the anonymous link server 100 with secret data obtained by concealing the behavior data, and causes the anonymous link server 100 to store and retain it in an unprocessed area 101 of the anonymous link server 100.

The anonymous link server 100 retains the secret data in which the behavior data of the user P is concealed, and notifies the loyalty program provider 30 of whether or not to permit point issuance based on the retained secret data. The anonymous link server 100 includes the unprocessed area 101 and a processed area 102. The unprocessed area 101 and the processed area 102 correspond to an example of a "storage area".

The unprocessed area 101 is an area for storing data before use processing in which the data is no longer valuable by being used, such as conversion into points, exchange into another type of data, or the like, is performed. In other words, the data stored in the unprocessed area 101 is valuable data that may be subject to some kind of use processing.

The processed area 102 is an area for storing information regarding data that has been subject to some kind of use processing and is no longer valuable. In other words, the data whose information is stored in the processed area 102 is not valuable data, and the use processing for the data will not be performed any more.

In the present embodiment, data in both the unprocessed area 101 and the processed area 102 is managed by a blockchain (BC). By using the blockchain, falsification of each piece of data and a fraudulent operation on the unprocessed area 101 and the processed area 102 may be suppressed, and the validity of each piece of data stored in the unprocessed area 101 and the processed area 102 may be guaranteed. However, the data in the unprocessed area 101 and the processed area 102 may be managed using a database when the validity does not need to be guaranteed.

The anonymous link server 100 receives, from the store 20, the provision of the secret data in which the behavior data is concealed. Then, the anonymous link server 100 stores and retains the secret data before the use processing in the unprocessed area 101.

Thereafter, the anonymous link server 100 registers the secret data in the processed area 102 when some kind of use processing is performed on the secret data, and when a new piece of secret data is generated by the use processing, it stores the new piece of secret data in the unprocessed area 101.

For example, point issuance for the behavior data corresponding to the secret data is also one of the use processing. Upon reception of a confirmation request as to whether or not to permit the point issuance to the user P from the loyalty program provider 30, the anonymous link server 100 confirms the secret data stored in the unprocessed area 101, and notifies the loyalty program provider 30 of a determination result as to whether or not to permit the point issuance. When the point issuance is permitted, the anonymous link server 100 registers the secret data corresponding to the issued point in the processed area 102. In other words, the anonymous link server 100 determines that the point issuance is permissible when the secret data is stored in the unprocessed area 101 and is not registered in the processed area 102.

The loyalty program provider 30 receives a request for the point issuance from the user P. In addition, the loyalty program provider 30 may receive a request for the point issuance to the user P from the store 20. Then, the loyalty program provider 30 inquires of the anonymous link server 100 whether or not the point issuance in response to the request is permissible. When a response indicating that the point issuance is permissible is returned from the anonymous link server 100, the loyalty program provider 30 issues a point to the user P in response to the request.

A user terminal 400 is an information processing apparatus to be used by the user P. The user P operates the user terminal 400 to input each piece of data, such as behavior data, and various requests.

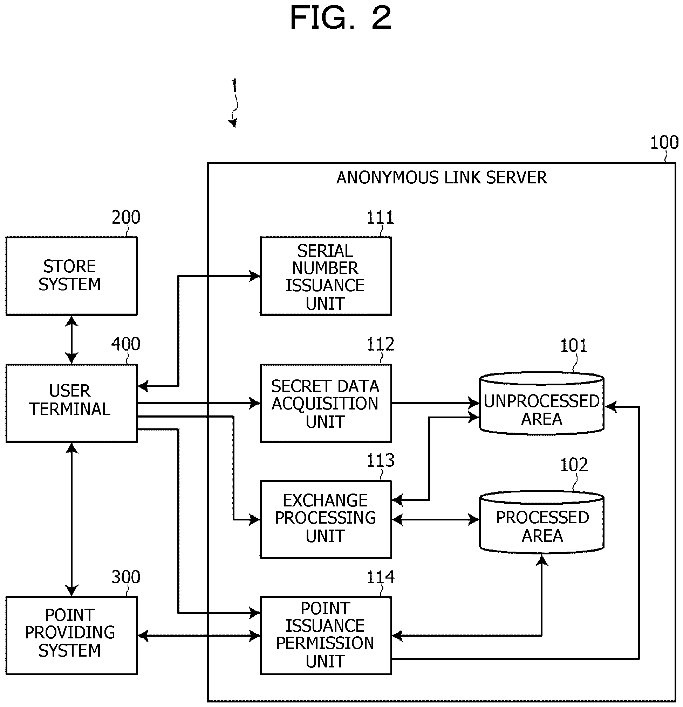

FIG. 2 is a block diagram of the anonymous link server. Next, details of the anonymous link server 100 according to the present embodiment will be described with reference to FIG. 2.

As illustrated in FIG. 2, the loyalty program system 1 includes the anonymous link server 100, a store system 200, a point providing system 300, and the user terminal 400. The store system 200 is an information processing system that manages behavior data of the user P in the store 20. The point providing system 300 is an information processing system that carries out point issuance to the user P in the loyalty program provider 30.

Here, some terms to be used in the following descriptions will be explained. A local token is a cryptocurrency corresponding to the behavior data, and is generated by the user terminal 400. In the loyalty program system 1, a local token is treated as data representing behavior data. A local token is a cryptocurrency owned by the user P in secret in the user terminal 400, and corresponds to behavior data, which is raw data. That is, a local token is not disclosed to persons other than the user P in the loyalty program system 1, and specific behavior of the user P represented by the behavior data is concealed. A local token is, for example, possession information indicating specific behavior, such as "having purchased a product x" or "having performed an action x".

A local token includes three elements (sn, x, r). A character string sn represents a serial number of the local token. A character string or a numerical value x represents content of the local token, that is, content of the behavior data. For example, in a case of managing environmental behavior, x = "garbage disposal" when the local token represents that the user P has taken out garbage. Furthermore, for example, when the local token represents that the user P owns 100 points in a loyalty system, x = "100". A character string r represents secret information of the local token.

A global token is data in which a local token is concealed. A global token is stored in the anonymous link server 100, which is a public area. A global token is, for example, data obtained by concealing possession information, such as "having purchased a product x" or "having performed an action x", and is a concealed local token. That is, a global token corresponds to secret data in which behavior data is concealed.

A global token includes three elements (sn, C, pk). A character string sn represents a serial number of the global token. The serial number of the local token matches the serial number of the global token. A character string or a numerical value C represents content of the concealed token, and is a commitment Comm(x, r) generated from x and r of the corresponding local token. A character string pk represents a public key of the owner of the corresponding local token. The user P holds the public key as his/her own unique identifier, and further has a corresponding signing key.

The anonymous link server 100 executes roughly three processes of an issuance process, an exchange process, and a settlement process. The issuance process is a process in which the anonymous link server 100 issues a global token and stores it in the unprocessed area 101. The exchange process is a process in which the anonymous link server 100 exchanges a specific global token for another global token. This exchange process includes, for example, processing of dividing one global token into a plurality of global tokens, processing of changing a global token corresponding to execution of specific behavior to a global token corresponding to possession of points, and the like. In the following descriptions, in the exchange process, a global token before the exchange will be referred to as a "pre-exchange global token", and global data after the exchange will be referred to as a "post-exchange global token". The settlement process is a process of permitting point issuance using the global token as evidence.

As illustrated in FIG. 2, the anonymous link server 100 includes, in addition to the unprocessed area 101 and the processed area 102, a serial number issuance unit 111, a secret data acquisition unit 112, an exchange processing unit 113, and a point issuance permission unit 114.

The serial number issuance unit 111 receives a serial number issuance request from the user terminal 400. The serial number issuance unit 111 receives, for example, a request for issuance of a serial number for a local token, a global token corresponding thereto, or an exchange destination local token. Then, the serial number issuance unit 111 issues a serial number and transmits it to the user terminal 400.

The secret data acquisition unit 112 receives, from the user terminal 400, a global token that has been verified and confirmed to be valid in the store system 200 and global token (GT) evidence indicating that the global token has been officially issued. The GT evidence includes a public key of the store 20, the public key of the user P, store signature text, and user signature text. Here, the store signature text is information indicating that the issuance of the global token has obtained authentication of the store 20. Furthermore, the user signature text is information indicating that the issuance of the global token has obtained authentication of the user P.

The secret data acquisition unit 112 verifies whether or not the issued serial number matches the serial number included in the obtained global token. Next, the secret data acquisition unit 112 verifies the validity of the store signature text and the user signature text using the public key of the store 20 and the public key of the user P. After the confirmation of the validity of the store signature text and the user signature text, the secret data acquisition unit 112 stores the obtained global token and the GT evidence thereof in the unprocessed area 101.

The global token stored in the unprocessed area 101 by the secret data acquisition unit 112 corresponds to an example of "first secret data". That is, the secret data acquisition unit 112 performs the issuance process of storing, in the storage area, the first secret data obtained by concealing the behavior data of the user related to the provided service. Additionally, the issuance process includes processing of storing the first secret data in the unprocessed area 101. Furthermore, the store 20 corresponds to an example of a "service provider", and the store signature text corresponds to an example of "first signature text". Furthermore, the user signature text corresponds to an example of "second signature text". That is, the issuance process includes processing of obtaining the first signature text of the store 20 for the behavior data and the second signature text of the user P for the first secret data and storing, in the anonymous link server 100, the first signature text and the second signature text together with the first secret data.

Here, since the store signature text is included in the GT evidence stored in the unprocessed area 101, it becomes possible to suppress addition of the global token related to the store 20 in the unprocessed area 101 without the authentication of the store 20. Furthermore, since the user signature text is included in the GT evidence, it becomes possible to suppress addition of the global token related to the user P in the unprocessed area 101 without the authentication of the user P.

The exchange processing unit 113 receives, from the user terminal 400, a post-exchange global token, exchange evidence of the post-exchange global token, and the user signature text. The exchange evidence includes information regarding a collection including the pre-exchange global token and the post-exchange global token, and zero-knowledge proof text indicating that the pre-exchange global token has been converted into the post-exchange global token based on a predetermined rule. The conversion according to the predetermined rule is a subset of the pre-exchange global token and the post-exchange global token.

The zero-knowledge proof is a technique by which, regarding plain text belonging to a specific collection, only a commitment of the plain text and the specific collection may be disclosed and the fact that the "source plain text of the commitment belongs to the specific collection" may be proved without disclosing the plain text. Data for enabling the zero-knowledge proof will be referred to as "zero-knowledge proof text". That is, it is proved that the "pre-exchange global token of the commitment and the post-exchange global token belong to the collection" by providing the collection including the pair of the pre-exchange global token and the post-exchange global token corresponding thereto using the exchange evidence and disclosing the commitment of the pre-exchange global token, the post-exchange global token, and the collection.

The exchange processing unit 113 obtains the pre-exchange global token corresponding to the post-exchange global token from the unprocessed area 101. Furthermore, the exchange processing unit 113 obtains the GT evidence or the exchange evidence stored together with the pre-exchange global token, and the user signature text. Here, in a case where the GT evidence is attached to the pre-exchange global token, the user signature text is included in the GT evidence, and thus the exchange processing unit 113 may obtain the user signature text from the GT evidence.

Next, the exchange processing unit 113 checks whether or not the pre-exchange global token exists in the processed area 102. When no pre-exchange global token exists in the processed area 102, the exchange processing unit 113 determines that the exchange process for the pre-exchange global token may be performed. Then, the exchange processing unit 113 retains the serial number of the post-exchange global token.

Next, the exchange processing unit 113 verifies the user signature text and the zero-knowledge proof text regarding the post-exchange global token using the exchange evidence, and confirms the validity of the post-exchange global token. With the zero-knowledge proof, the exchange processing unit 113 is enabled to confirm that the exchange of the global token has been processed according to a predetermined exchange rule. After the confirmation of the validity of the post-exchange global token, the exchange processing unit 113 stores the post-exchange global token, the exchange evidence, and the user signature text in the unprocessed area 101.

Thereafter, the exchange processing unit 113 checks whether or not the post-exchange global token exists in the unprocessed area 101 using the retained serial number of the post-exchange global token. After confirming that the post-exchange global token exists in the unprocessed area 101, the exchange processing unit 113 verifies the user signature text and the zero-knowledge proof text regarding the pre-exchange global token using the exchange evidence, and confirms the validity of the pre-exchange global token. After the confirmation of the validity of the pre-exchange global token, the exchange processing unit 113 stores the pre-exchange global token, the GT evidence or the exchange evidence, and the user signature text in the processed area 102. Here, since the GT evidence includes the user signature text, the exchange processing unit 113 may not store the user signature text in the processed area 102 in the case of storing the pre-exchange global token with the GT evidence attached thereto.

Here, the pre-exchange global token in the exchange process corresponds to an example of the "first secret data", and the post-exchange global token corresponds to an example of "second secret data". That is, the exchange processing unit 113 performs the exchange process of exchanging the first secret data for the second secret data corresponding to issuance of a point converted from the behavior data according to a predetermined rule. Additionally, the exchange process includes processing of exchanging the first secret data for the second secret data when the first secret data is stored in the unprocessed area 101 and is not registered in the processed area 102. Moreover, the exchange process includes processing of storing the second secret data in the unprocessed area 101 and registering the first secret data in the processed area 102. Furthermore, the exchange process includes processing of obtaining the zero-knowledge proof text indicating the validity of the conversion of the first secret data into the second secret data and performing the exchange when the validity is confirmed based on the zero-knowledge proof text. Furthermore, the user signature text for the post-exchange global token corresponds to an example of "third signature text". That is, the exchange process includes processing of obtaining the third signature text of the user for the second secret data and storing the second secret data in the storage area together with the third signature text.

The point issuance permission unit 114 receives, from the point providing system 300, a request for transmission of the global token corresponding to the local token indicating execution of the point issuance specified by the user P. Next, the point issuance permission unit 114 checks whether or not the specified global token exists in the processed area 102.

When no specified global token exists in the processed area 102, the point issuance permission unit 114 obtains the specified global token from the unprocessed area 101. Then, the point issuance permission unit 114 transmits the obtained global token to the point providing system 300. The point issuance permission unit 114 permits the point providing system 300 to carry out the point issuance by this transmission of the global token to the point providing system 300.

Thereafter, the point issuance permission unit 114 receives the global token transmitted to the point providing system 300, a public key owned by the loyalty program provider 30, point issuance signature text by the loyalty program provider 30, and the user signature text by the user P. Next, the point issuance permission unit 114 confirms the validity of the point issuance signature text and the user signature text. Then, the point issuance permission unit 114 collectively registers, in the processed area 102, the global token, the public keys of the loyalty program provider 30 and the user P, the point issuance signature text, the user signature text, and the evidence.

In this manner, the point issuance permission unit 114 executes the settlement process of presenting the second secret data to the point providing system 300 and making a point issuance request. The settlement process includes processing of presenting the second secret data to the point providing system 300 when the second secret data is stored in the unprocessed area 101 and is not registered in the processed area 102. Furthermore, when the second secret data is presented to the point providing system 300 to make the point issuance request, the point issuance permission unit 114 registers the second secret data in the processed area 102.

Moreover, the point issuance signature text in the settlement process corresponds to an example of "fourth signature text", and the user signature text corresponds to an example of "fifth signature text". That is, when the point issuance request is made, the point issuance permission unit 114 obtains the fourth signature text by the point providing system 300 and the fifth signature text by the user P for the point issuance corresponding to the second secret data. Then, the point issuance permission unit 114 confirms the validity of the point issuance corresponding to the second secret data by the fourth signature text and the fifth signature text.

Here, with the point issuance signature text being stored in the processed area 102 together with the global token, transfer of the global token from the unprocessed area 101 to the processed area 102 without consent of the loyalty program provider 30 may be suppressed. Furthermore, with the user signature text being stored in the processed area 102 together with the global token, transfer of the global token from the unprocessed area 101 to the processed area 102 without consent of the user P may be suppressed.

Note that the point issuance permission unit 114 may transmit the global token to the point providing system 300, receive the user signature text and store the global token in the processed area 102 thereafter, and then instruct the point providing system 300 to give the point. In this case, the point providing system 300 transmits the global token to the user terminal 400 without giving the point at the time of the reception of the global token, and then gives the point to the user P upon reception of the instruction to give the point. The user signature text in this case corresponds to a unique example of "sixth signature text". Then, when the sixth signature text of the user for the point issuance corresponding to the second secret data is obtained, the point issuance permission unit 114 presents the second secret data to the point providing system 300 to make a point issuance request.

Next, operations of the store system 200, the point providing system 300, and the user terminal 400 in each of the issuance process, the exchange process, and the settlement process will be described. As a premise, the user P has a public key and a signing key for the public key. Furthermore, the store 20 also has a public key and a signing key for the public key. Furthermore, the point providing system 300 also has a public key and a signing key for the public key. Furthermore, the store system 200 has a protocol for authenticating specific behavior of the user P. Furthermore, the point providing system 300 has a protocol for performing processing according to a token. For example, the point providing system 300 has a protocol of issuing a point according to a local token indicating point issuance.

In the issuance process, the user terminal 400 retains behavior data indicating that the user P has performed the specific behavior that may be converted into a point, and behavior evidence for proving the execution of the specific behavior. The user terminal 400 generates a random number. Furthermore, the user terminal 400 transmits, to the serial number issuance unit 111 of the anonymous link server 100, a request for obtaining a serial number to be assigned to the local token corresponding to the behavior data. Thereafter, the user terminal 400 receives the serial number from the serial number issuance unit 111.

Next, the user terminal 400 creates a commitment of the behavior data from the behavior data and the random number. The commitment is one of methods for concealing plain text. At the time of generating secret data from the behavior data, which is plain text, the user terminal 400 generates C, which is a commitment, as C = Comm(m, r) using the random number and Comm, which is a function having two arguments. Here, for example, m, which is plain text, represents the behavior data, and r represents the random number. For example, the user terminal 400 may set a hash value of a character string obtained by combining the plain text and the random number as a commitment. Furthermore, the user terminal 400 may set, as a commitment, a value obtained by multiplying a power of plain text of one of two sources that are neither 0 nor 1 in a finite field having a sufficiently large prime number as a characteristic by a power of a random number of the other one.

Moreover, the user terminal 400 generates a local token using the serial number, the behavior data, and the random number. Moreover, the user terminal 400 generates a global token in which the local token is concealed using the serial number, the commitment, and the public key of the user P.

Next, the user terminal 400 collectively transmits the local token, the global token, and the behavior evidence to the store system 200. Thereafter, the user terminal 400 receives, from the store system 200, the global token and the store signature text generated by the signing key of the store 20 upon confirmation of the validity of the local token. Then, the user terminal 400 confirms the validity of the received store signature text using the public key of the store 20.

After the confirmation of the validity of the store signature text, the user terminal 400 generates user signature text for the global token, the public key of the store 20, and the store signature text using the signing key of the user P. Then, the user terminal 400 generates GT evidence including the public key of the store 20, the public key of the user P, the store signature text, and the user signature text. Then, the user terminal 400 transmits the global token and the GT evidence to the secret data acquisition unit 112 of the anonymous link server 100.

Furthermore, the user terminal 400 executes the following processing in the exchange process. As a premise, the user P has a pre-exchange global token at the time of the exchange process. Furthermore, a predetermined rule for converting the global token exists as public information.

Here, each of the pre-exchange global token and the post-exchange global token may be one or more. For example, there is a plurality of pre-exchange global tokens, and contents represented by the respective tokens are x1, ..., xn. In addition, there is a plurality of post-exchange global tokens, and contents represented by the respective tokens are y1, ..., yn. Additionally, the predetermined rule is defined as R. That is, when R is applied to x1, ..., xn, y1, ..., yn is obtained. In other words, a combination in which a collection X of the contents indicated by the pre-exchange global tokens is associated with a collection Y of the contents indicated by the post-exchange global tokens is a subset of R. For example, R is an exchange rate, which is a rule for conversion of x yen into y dollars. Furthermore, R is a point exchange rule, which is a rule for conversion of a purchase history of x into y points. Furthermore, the pre-exchange global tokens are registered in the unprocessed area 101.

The user terminal 400 transmits a request for obtaining a serial number to be assigned to a post-exchange global token to the serial number issuance unit 111 of the anonymous link server 100. Thereafter, the user terminal 400 receives the serial number to be assigned to the post-exchange global token from the serial number issuance unit 111.

Next, the user terminal 400 generates a local token using the serial number, the content after the exchange, and a random number. Furthermore, the user terminal 400 creates a commitment for the local token using the content after the exchange and the random number. Moreover, the user terminal 400 generates a post-exchange global token using the serial number, the commitment, and the public key of the user P.

Next, the user terminal 400 generates zero-knowledge proof text indicating that the content represented by the post-exchange global token is obtained when the content represented by the pre-exchange global token is converted based on the predetermined rule. That is, the user terminal 400 generates the zero-knowledge proof text indicating that the combination of the content represented by the pre-exchange global token and the content represented by the post-exchange global token belongs to the collection indicated by the predetermined rule.

Next, the user terminal 400 generates exchange evidence including information regarding the collection of the pre-exchange global token and the post-exchange global token and the zero-knowledge proof text. Next, the user terminal 400 generates user signature text for the exchange evidence using the signing key of the user P. Thereafter, the user terminal 400 collectively transmits the post-exchange global token, the exchange evidence, and the user signature text to the exchange processing unit 113 of the anonymous link server 100.

Furthermore, the user terminal 400 executes the following processing in the settlement process. As a premise, the user P has a local token indicating point issuance. In addition, a global token corresponding to the local token is stored in the unprocessed area 101.

The user terminal 400 retains the local token to be settled. Next, the user terminal 400 generates user signature text for the local token to be settled using the signing key of the user P. Thereafter, the user terminal 400 transmits the local token to be settled and the user signature text to the point providing system 300.

Thereafter, the user terminal 400 receives, from the point providing system 300, the global token indicating execution of the point issuance, the public key owned by the loyalty program provider 30, and the point issuance signature text. Next, the user terminal 400 generates user signature text for the global token. Then, the user terminal 400 transmits, to the anonymous link server 100, the global token indicating the execution of the point issuance, the public key owned by the loyalty program provider 30, the point issuance signature text, and the user signature text.

In the issuance process, the store system 200 receives, from the user terminal 400, a local token indicating the behavior data, the global token corresponding to the local token, and the behavior evidence. Next, the store system 200 confirms the validity of the behavior data indicated by the local token based on the behavior evidence, that is, execution of the specific behavior by the user P. Moreover, the store system 200 confirms that the commitment is a commitment generated by the behavior data and the random number.

Next, the store system 200 generates store signature text for the global token using the signing key of the store 20. Thereafter, the store system 200 transmits the global token and the store signature text to the user terminal 400.

In the settlement process, the point providing system 300 receives the local token to be settled and the user signature text from the user terminal 400. Next, the point providing system 300 confirms the validity of the user signature text. After the confirmation of the validity of the user signature text, the point providing system 300 transmits a request for transmission of the global token to the point issuance permission unit 114 of the anonymous link server 100.

Thereafter, upon reception of the global token from the point issuance permission unit 114, the point providing system 300 gives a point to the user P according to the content of the local token corresponding to the global token. Then, the point providing system 300 generates point issuance signature text. Next, the point providing system 300 transmits, to the user terminal 400, the global token indicating the execution of the point issuance, the public key owned by the loyalty program provider 30, and the point issuance signature text.

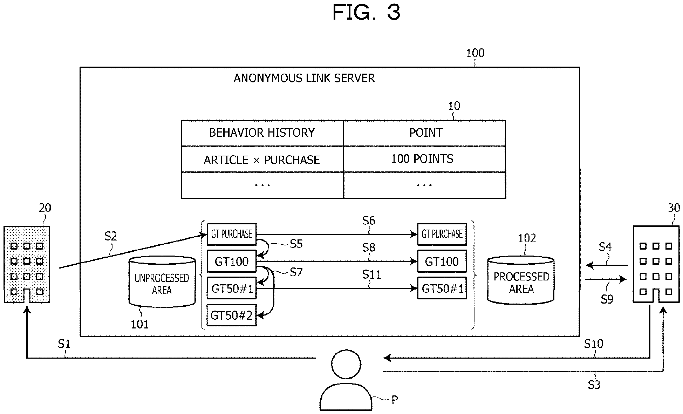

FIG. 3 is a diagram illustrating an outline of the issuance process, the exchange process, and the settlement process by the loyalty program system. Next, an example of the issuance process, the exchange process, and the settlement process by the loyalty program system 1 will be described with reference to FIG. 3. Here, a case where a point is issued according to a rule indicated by a rate table 10 for article purchase will be described.

The user P transmits, to the store system 200, a local token corresponding to behavior data indicating article purchase and behavior evidence therefor using the user terminal 400, and requests the store 20 to execute purchase processing (step S1).

In response to the request for execution of the purchase processing, the store system 200 of the store 20 conceals the local token indicating the article purchase to generate a "global token GT purchase", which is a global token indicating the article purchase. Then, the store system 200 transmits the global token GT purchase to the anonymous link server 100 to store it in the unprocessed area 101 (step S2).

Next, the user P requests the point providing system 300 of the loyalty program provider 30 to issue 50 points using the user terminal 400 (step S3).

Upon reception of the request for issuance of 50 points, the point providing system 300 of the loyalty program provider 30 transmits a request for obtaining a global token indicating the issuance of 50 points to the anonymous link server 100 (step S4).

The anonymous link server 100 confirms that the behavior data of the article purchase indicated by the global token GT purchase is converted into 100 points according to the rate table 10. Then, the anonymous link server 100 exchanges the global token GT purchase, which serves as a pre-exchange global token, for a global token GT100, which serves as a post-exchange global token indicating the issuance of 100 points (step S5). Thereafter, the anonymous link server 100 registers the global token GT purchase for which the exchange process has been performed in the processed area 102 (step S6).

Next, the anonymous link server 100 exchanges the global token GT100, which serves as a pre-exchange global token, for global tokens GT50#1 and GT50#2, which serve as two post-exchange global tokens indicating the issuance of 50 points (step S7). Thereafter, the anonymous link server 100 registers the global token GT100 for which the exchange process has been performed in the processed area 102 (step S8). This exchange of the global token GT100 for the global tokens GT50#1 and GT50#2 is an example of the exchange process.

Next, the anonymous link server 100 transmits the global token GT50#1 indicating the issuance of 50 points to the point providing system 300 of the loyalty program provider 30 (step S9). After the reception of the global token GT50#1, the point providing system 300 of the loyalty program provider 30 issues 50 points to the user P (step S10).

Thereafter, the anonymous link server 100 registers the global token GT50#1 in the processed area 102 (step S11).

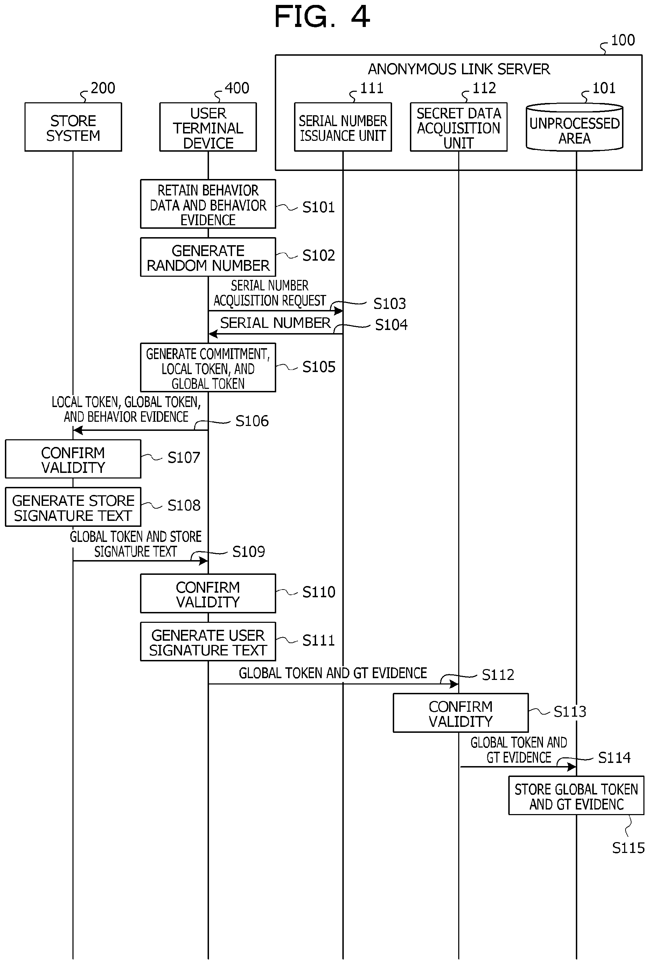

FIG. 4 is a sequence diagram of the issuance process in the loyalty program system according to the embodiment. Next, a flow of the issuance process in the loyalty program system 1 according to the embodiment will be described with reference to FIG. 4.

The user terminal 400 retains behavior data indicating that the user P has performed specific behavior that may be converted into a point, and behavior evidence for proving execution of the specific behavior (step S101).

The user terminal 400 generates a random number (step S102).

Next, the user terminal 400 transmits, to the serial number issuance unit 111 of the anonymous link server 100, a request for obtaining a serial number to be assigned to the local token corresponding to the behavior data (step S103).

Upon reception of the request for obtaining a serial number, the serial number issuance unit 111 of the anonymous link server 100 issues a serial number and transmits it to the user terminal 400 (step S104).

The user terminal 400 creates a commitment of the behavior data from the behavior data and the random number. Furthermore, the user terminal 400 generates a local token using the serial number received from the serial number issuance unit 111, the behavior data, and the random number. Moreover, the user terminal 400 generates a global token in which the local token is concealed using the serial number, the commitment, and the public key of the user P (step S105).

Next, the user terminal 400 collectively transmits the local token, the global token, and the behavior evidence to the store system 200 (step S106).

The store system 200 confirms, based on the received behavior evidence, the validity of the behavior data indicated by the local token. Moreover, the store system 200 confirms the validity of the commitment, that is, whether the commitment is based on the behavior data and the random number (step S107).

Next, the store system 200 generates store signature text for the global token using the signing key of the store 20 (step S108).

Thereafter, the store system 200 transmits the global token and the store signature text to the user terminal 400 (step S109).

The user terminal 400 confirms the validity of the store signature text received from the store system 200 using a public key PK (step S110).

Next, the user terminal 400 generates user signature text for the global token, the public key of the store 20, and the store signature text using the signing key of the user P (step S111).

Thereafter, the user terminal 400 transmits, to the secret data acquisition unit 112 of the anonymous link server 100, the global token and the GT evidence including the public key of the store 20, the public key of the user P, the store signature text, and the user signature text (step S112).

The secret data acquisition unit 112 checks whether or not the issued serial number matches the serial number of the global token obtained by the user terminal 400. Furthermore, the secret data acquisition unit 112 verifies the validity of the store signature text and the user signature text using the public key of the store 20 and the public key of the user P (step S113).

Next, the secret data acquisition unit 112 transmits the obtained global token and GT evidence thereof to the unprocessed area 101 (step S114). The unprocessed area 101 stores the transmitted global token and GT evidence thereof (step S115).

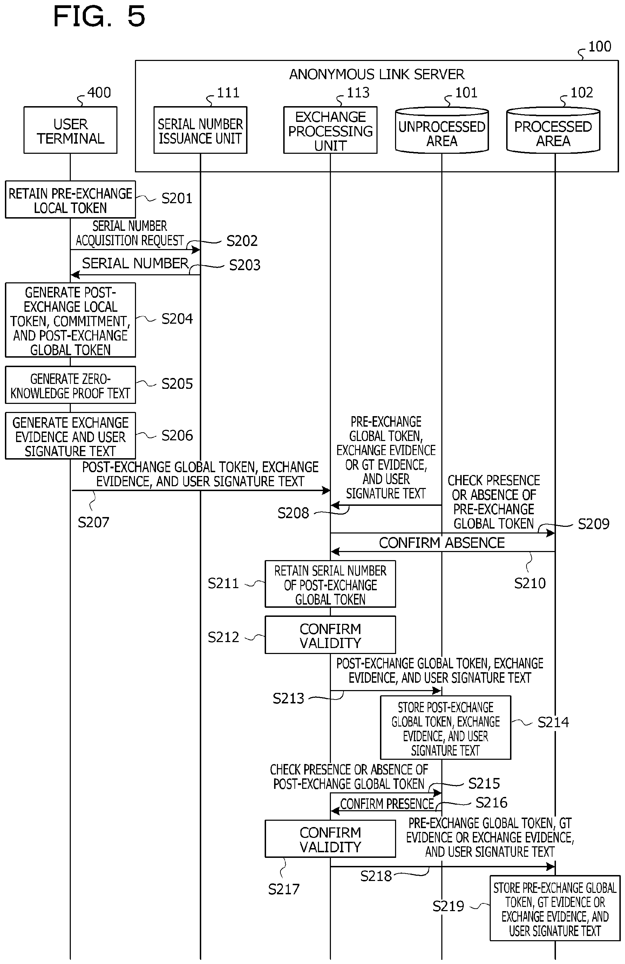

FIG. 5 is a sequence diagram of the exchange process in the loyalty program system according to the embodiment. Next, a flow of the exchange process in the loyalty program system 1 according to the embodiment will be described with reference to FIG. 5.

The user terminal 400 retains a pre-exchange local token (step S201).

The user terminal 400 transmits a request for obtaining a serial number to be assigned to a post-exchange global token to the serial number issuance unit 111 of the anonymous link server 100 (step S202).

Upon reception of the request for obtaining a serial number, the serial number issuance unit 111 of the anonymous link server 100 issues a serial number and transmits it to the user terminal 400 (step S203).

The user terminal 400 generates a local token using the serial number received from the serial number issuance unit 111, the content after the exchange, and the random number. Furthermore, the user terminal 400 creates a commitment for the local token using the content after the exchange and the random number. Moreover, the user terminal 400 generates a post-exchange global token using the serial number, the commitment, and the public key of the user P (step S204).

Next, the user terminal 400 generates zero-knowledge proof text indicating that the content represented by the post-exchange global token is obtained when the content represented by the pre-exchange global token is converted based on a predetermined rule (step S205).

Next, the user terminal 400 generates exchange evidence including information regarding the collection of the pre-exchange global token and the post-exchange global token and the zero-knowledge proof text. Next, the user terminal 400 generates user signature text for the exchange evidence using the signing key of the user P (step S206).

Next, the user terminal 400 collectively transmits the post-exchange global token, the exchange evidence, and the user signature text to the exchange processing unit 113 of the anonymous link server 100 (step S207).

The exchange processing unit 113 obtains the pre-exchange global token corresponding to the post-exchange global token from the unprocessed area 101. Furthermore, the exchange processing unit 113 obtains the GT evidence or the exchange evidence stored together with the pre-exchange global token, and the user signature text (step S208).

Next, the exchange processing unit 113 checks whether or not the pre-exchange global token exists in the processed area 102 (step S209).

Here, the exchange processing unit 113 confirms the absence of the pre-exchange global token in the processed area 102 (step S210).

Next, the exchange processing unit 113 determines that the exchange process may be performed on the pre-exchange global token. Then, the exchange processing unit 113 retains the serial number of the post-exchange global token to be exchanged (step S211).

Next, the exchange processing unit 113 verifies the user signature text and the zero-knowledge proof text regarding the post-exchange global token using the exchange evidence, and confirms the validity of the post-exchange global token (step S212).

Next, the exchange processing unit 113 transmits the post-exchange global token, the exchange evidence, and the user signature text to the unprocessed area 101 (step S213).

The unprocessed area 101 stores the post-exchange global token, the exchange evidence, and the user signature text transmitted from the exchange processing unit 113 (step S214).

Next, the exchange processing unit 113 checks whether or not the post-exchange global token exists in the unprocessed area 101 using the retained serial number of the post-exchange global token (step S215).

Then, the exchange processing unit 113 confirms that the post-exchange global token exists in the unprocessed area 101 (step S216).

Next, the exchange processing unit 113 verifies the user signature text and the zero-knowledge proof text regarding the pre-exchange global token using the exchange evidence, and confirms the validity of the pre-exchange global token (step S217).

Next, the exchange processing unit 113 transmits, to the processed area 102, the pre-exchange global token, the GT evidence or the exchange evidence, and the user signature text (step S218).

The processed area 102 stores the pre-exchange global token, the GT evidence or the exchange evidence, and the user signature text transmitted from the exchange processing unit 113 (step S219).

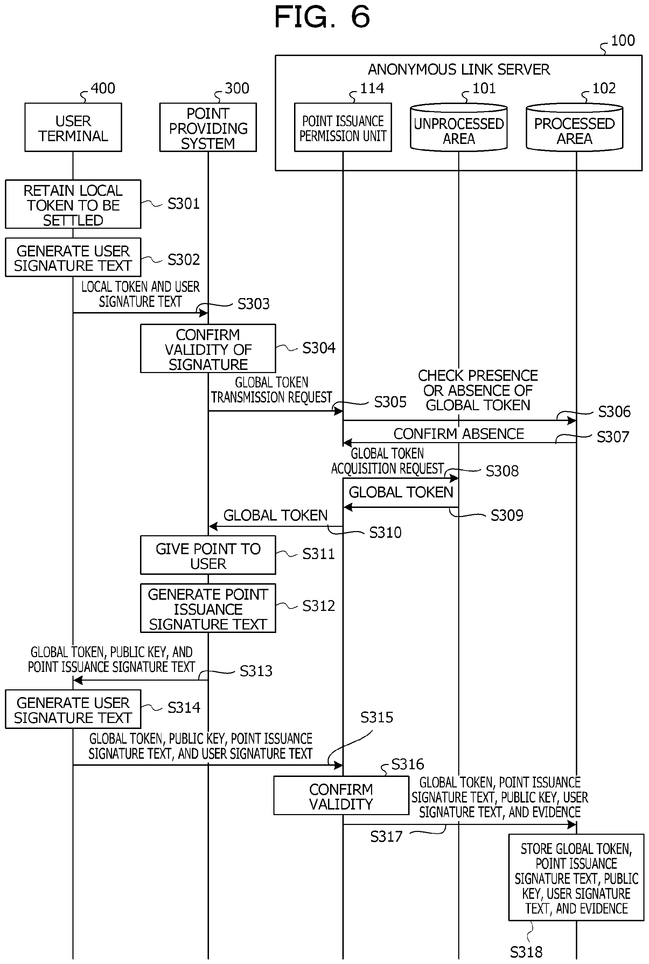

FIG. 6 is a sequence diagram of the settlement process in the loyalty program system according to the embodiment. Next, a flow of the settlement process in the loyalty program system 1 according to the embodiment will be described with reference to FIG. 6.

The user terminal 400 retains a local token to be settled (step S301).

Next, the user terminal 400 generates user signature text for the local token to be settled using the signing key of the user P (step S302).

Next, the user terminal 400 transmits the local token to be settled and the user signature text to the point providing system 300 (step S303).

The point providing system 300 confirms the validity of the user signature text received from the user terminal 400 (step S304).

Next, the point providing system 300 transmits a request for transmission of the global token to the point issuance permission unit 114 of the anonymous link server 100 (step S305).

The point issuance permission unit 114 checks whether or not the global token corresponding to the local token indicating the execution of the point issuance exists in the processed area 102 (step S306).

Here, the point issuance permission unit 114 confirms that the global token corresponding to the local token indicating the execution of the point issuance does not exist in the processed area 102 (step S307).

Next, the point issuance permission unit 114 transmits, to the unprocessed area 101, a request for obtaining the specified global token (step S308).

Then, the point issuance permission unit 114 obtains, from the unprocessed area 101, the global token corresponding to the local token indicating the execution of the point issuance (step S309).

Next, the point issuance permission unit 114 transmits the obtained global token to the point providing system 300 (step S310).

The point providing system 300 gives a point to the user P according to the content of the local token corresponding to the global token received from the point issuance permission unit 114 (step S311).

Then, the point providing system 300 generates point issuance signature text (step S312).

Next, the point providing system 300 transmits, to the user terminal 400, the global token indicating the execution of the point issuance, the public key owned by the loyalty program provider 30, and the point issuance signature text (step S313).

The user terminal 400 generates user signature text for the received global token (step S314).

Then, the user terminal 400 transmits, to the anonymous link server 100, the global token indicating the execution of the point issuance, the public key owned by the loyalty program provider 30, the point issuance signature text, and the user signature text (step S315).

The point issuance permission unit 114 confirms the validity of the point issuance signature text and the user signature text received from the user terminal 400 (step S316).

Thereafter, the point issuance permission unit 114 collectively transmits, to the processed area 102, the global token, the public keys of the loyalty program provider 30 and the user P, the point issuance signature text, the user signature text, and the evidence (step S317).

The processed area 102 collectively stores the global token, the public keys of the loyalty program provider 30 and the user P, the point issuance signature text, the user signature text, and the evidence (step S318).

### (Hardware Configuration)

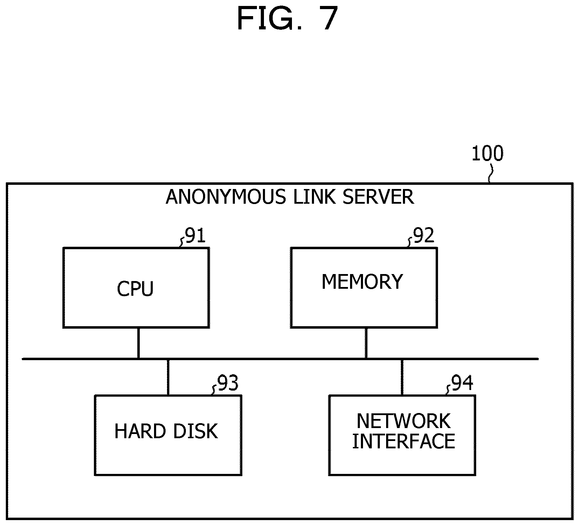

FIG. 7 is a hardware configuration diagram of the anonymous link server. Next, an exemplary hardware configuration of the anonymous link server 100 will be described with reference to FIG. 7.

As illustrated in FIG. 7, the anonymous link server 100 includes, for example, a central processing unit (CPU) 91, a memory 92, a hard disk 93, and a network interface 94.

The CPU 91 is coupled to the memory 92, the hard disk 93, and the network interface 94 via a bus.

The network interface 94 is an interface for communication between the anonymous link server 100 and an external device. The network interface 94 relays communication between, for example, the CPU 91 and the store system 200, the point providing system 300, and the user terminal 400.

The hard disk 93 is an auxiliary storage device. The hard disk 93 includes the unprocessed area 101 and the processed area 102 exemplified in FIG. 2. In addition, the hard disk 93 stores various programs including programs for implementing the functions of the serial number issuance unit 111, the secret data acquisition unit 112, the exchange processing unit 113, and the point issuance permission unit 114 exemplified in FIG. 2.

The memory 92 is a main storage device. For example, a dynamic random access memory (DRAM) may be used as the memory 92.

The CPU 91 reads various programs from the hard disk 93, and loads them in the memory 92 for execution. As a result, the CPU 91 implements the functions of the serial number issuance unit 111, the secret data acquisition unit 112, the exchange processing unit 113, and the point issuance permission unit 114 exemplified in FIG. 2.

As described above, the anonymous link server according to the present embodiment obtains the secret data in which the behavior data is concealed from the store system, and stores it in the unprocessed area. Then, in the case of point issuance, the anonymous link server converts the secret data indicating the behavior data into the secret data indicating the point issuance, registers the secret data indicating the behavior data in the processed area, and requests the point providing system to carry out the point issuance. Thereafter, when the point is given to the user, the anonymous link server registers the secret data indicating the point issuance in the processed area.

As a result, the anonymous link server retains the secret data and the point issuance is executed based on the secret data, whereby the point issuance is executed without disclosing the behavior data of the user to the store and the loyalty program provider so that confidentiality of the personal information is secured. Therefore, the loyalty program provider is enabled to ensure the security of the loyalty program by ensuring the protection of the personal information, and to efficiently manage the loyalty program by facilitating new entry.

## Claims

1. An information processing program for causing a computer to execute a process comprising:
storing, in a storage area, first secret data in which behavior data of a user related to a provided service is concealed;
exchanging the first secret data for second secret data that corresponds to issuance of a point converted from the behavior data according to a predetermined rule; and
presenting the second secret data to a point providing system and making a point issuance request.

2. The information processing program according to claim 1, wherein
the storing the first secret data in the storage area includes storing the first secret data in, of an unprocessed area and a processed area included in the storage area, the unprocessed area,
the exchanging includes exchanging the first secret data for the second secret data, storing the second secret data in the unprocessed area, and registering the first secret data in the processed area when the first secret data is stored in the unprocessed area and is not registered in the processed area, and
the making the point issuance request includes presenting the second secret data to the point providing system when the second secret data is stored in the unprocessed area and is not registered in the processed area,
the recording medium storing the information processing program for causing the computer to execute the process further comprising:
registering the second secret data in the processed area when the point issuance request is made.

3. The information processing program according to claim 1, wherein
the storing the first secret data in the storage area includes:
obtaining first signature text of a provider of the service for the behavior data and second signature text of the user for the first secret data; and
storing, in the storage area, the first signature text and the second signature text together with the first secret data.

4. The information processing program according to claim 1, wherein
the exchanging includes obtaining zero-knowledge proof text that indicates validity of conversion of the first secret data into the second secret data, and performing the exchanging when the validity is confirmed based on the zero-knowledge proof text.

5. The information processing program according to claim 1, wherein
the exchanging includes obtaining third signature text of the user for the second secret data, and storing the second secret data in the storage area together with the third signature text.

6. The information processing program according to claim 1, the recording medium storing the information processing program for causing the computer to execute the process further comprising:
when the point issuance request is made, obtaining fourth signature text of the point providing system and fifth signature text of the user for the issuance of the point that corresponds to the second secret data, and confirming validity of the issuance of the point that corresponds to the second secret data based on the fourth signature text and the fifth signature text.

7. The information processing program according to claim 1, wherein
the making the point issuance request includes is executed when sixth signature text of the user for the issuance of the point that corresponds to the second secret data is obtained.

8. An information processing method implemented by a computer, the information processing method comprising:
storing, in a storage area, first secret data in which behavior data of a user related to a provided service is concealed;
exchanging the first secret data for second secret data that corresponds to issuance of a point converted from the behavior data according to a predetermined rule; and
presenting the second secret data to a point providing system and making a point issuance request.

9. An information processing apparatus comprising:
a controller configured to:
store, in a storage area, first secret data in which behavior data of a user related to a provided service is concealed;
exchange the first secret data for second secret data that corresponds to issuance of a point converted from the behavior data according to a predetermined rule; and
present the second secret data to a point providing system and making a point issuance request.
